Europäisches Patentamt

European Patent Office

Office européen des brevets

(11) Numéro de publication: **0 291 608 B1**

## (12) FASCICULE DE BREVET EUROPEEN

(45) Date de publication de fascicule du brevet:
**02.01.92**

(51) Int. Cl.⁵: **F16C 33/60**

(21) Numéro de dépôt: **87401116.6**

(22) Date de dépôt: **19.05.87**

(54) **Ensemble de support en rotation et d'étanchéité d'un premier élément tournant dans un second élément.**

(43) Date de publication de la demande:
**23.11.88 Bulletin 88/47**

(45) Mention de la délivrance du brevet:
**02.01.92 Bulletin 92/01**

(84) Etats contractants désignés:
**DE FR GB IT**

(56) Documents cités:
**EP-A- 0 077 710        EP-A- 0 095 415
DE-A- 1 775 863        DE-B- 1 106 565
DE-C- 1 039 316        FR-A- 2 528 787
GB-A- 2 122 152        US-A- 4 362 344
US-A- 4 395 078**

(73) Titulaire: **BENDIX ESPANA S.A.
Balmès 243 Apartado 9556
E-08080 Barcelona 6(ES)**

(72) Inventeur: **Mansilla, Narciso Anguera
Calle Galileo 337 6o 4a
Barcelona 28(ES)**

(74) Mandataire: **Timoney, Ian Charles Craig et al
BENDIX FRANCE Division Technique Service
Brevets Bendix Europe 126, rue de Stalingrad
F-93700 Drancy(FR)**

## Description

La présente invention concerne un ensemble de support en rotation et d'étanchéité d'un premier élément tournant dans un second élément; plus particulièrement, mais non exclusivement, d'un élément rotatif de valve de distribution de servomécanisme, notamment de direction assistée de véhicule, tournant dans un boîtier de distributeur hydraulique; comprenant une structure de chemin de roulement externe portant un joint à lèvre et incluant deux demi-chemins de roulement en tôle comportant deux portions de collerettes externes radiales accolées l'une à l'autre servant au montage de la structure du chemin de roulement externe, et un chemin de roulement interne formé sur le premier élément.

On connaît du DE-A-1 775 863 un tel ensemble de support en rotation et d'étanchéité d'un joint à lèvre et d'un premier élément tournant dans un second élément, conforme au préambule de la revendication indépendante.

On connaît par ailleurs du DE-C-1 093 316 un ensemble de support en rotation et d'étanchéité comprenant une structure de chemin de roulement externe en tôle.

Un ensemble de même type est décrit dans le document FR-A-2 528 787. Dans ce document, le joint à lèvre (coopérant avec un second élément tournant distinct du premier élément tournant formant le chemin de roulement), est monté dans la structure de chemin de roulement externe qui est constituée sous la forme d'une pièce tubulaire massive qui doit être usinée avec précision.

On connait également, notamment du document FR - A - 2 364 802 un chemin de roulement externe constitué de deux demi-chemins assemblés, dans l'ouverture du second élément, par un écrou annulaire, les deux demi-chemins étant toutefois réalisés à partir de flans métalliques annulaires usinés, l'étanchéité dynamique étant assurée par des joints toriques portés par le premier élément tournant et coopérant avec la paroi de l'ouverture du second élément, dans un agencement de fabrication et de montage délicats et coûteux.

La présente invention a pour objet de proposer un ensemble du type susmentionné, de conception robuste et légère et de faibles coûts de fabrication et de montage, convenant à une fabrication en très grande série, et offrant une large gamme de possibilités d'aménagement in situ entre les premier et second éléments.

Selon l'invention la structure du chemin de roulement externe est montée dans une ouverture du second élément traversée par le premier élément, un premier des deux demi-chemins de roulement comportant une partie de prolongement opposée à la portion de collerette et portant le joint à lèvre coopérant avec le premier élément tournant.

D'autres caractéristiques et avantages de la présente invention ressortiront de la description suivante de modes de réalisation, donnés à titre illustratif mais nullement limitatif, faite en relation avec les dessins annexés, sur lesquels :

la figure 1 est une demi-vue en coupe longitudinale d'un distributeur hydraulique rotatif pour servodirection mettant en oeuvre un premier et un second modes de réalisation d'ensembles de support en rotation et d'étanchéité selon l'invention ; et

la figure 2 est une demi-vue en coupe longitudinale, symétrique de celle de la figure 1 et montrant des troisième et quatrième modes de réalisation d'ensembles de support en rotation et d'étanchéité selon l'invention.

Dans la description qui va suivre et sur les dessins, les éléments identiques ou analogues portent les mêmes chiffres de référence, éventuellement indicés.

Sur les figures, on a représenté schématiquement un distributeur hydraulique pour servodirection de véhicule, du type décrit dans le document EP - A-0 095 415, au nom de la demanderesse et comprenant essentiellement un rotor en étoile 1 couplé en rotation à un arbre d'entrée 2 et reçu dans une chambre discoïde 3 d'un stator cylindrique, désigné généralement par la référence 4, couplé en rotation à un arbre de sortie coaxial 5 et supporté à rotation dans un alésage 6 d'un boîtier de distributeur 7. Le stator 4 et l'arbre d'entrée 2 sont couplés par un accouplement élastique à course morte comportant une série de ressorts en C 8, tel que décrit dans le document EP - A - 0 077 710 au nom de la demanderesse. Comme on le voit sur les dessins, l'arbre d'entrée 2 est supporté à rotation de façon étanche dans une ouverture d'entrée constituée d'un alésage central coaxial 6 formé dans une paroi frontale du boîtier 7, tandis que l'arbre de sortie 5 est supporté à rotation étanche dans le boîtier 7.

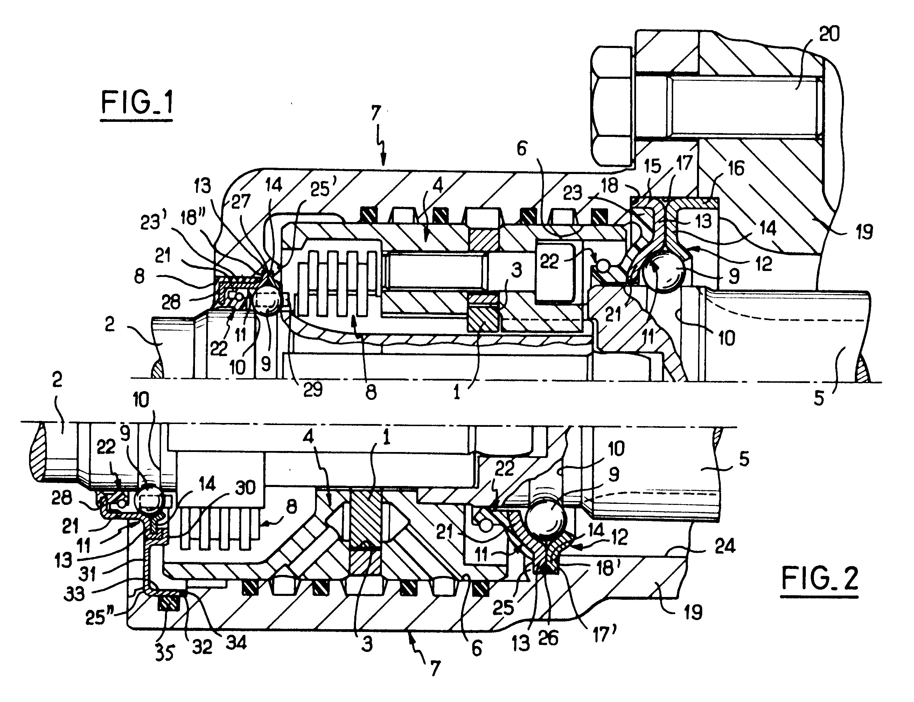

On se référera, en premier lieu, à l'ensemble de support en rotation et d'étanchéité de la figure 1 entre l'arbre de sortie 5 et le boîtier 7. Conformément à l'invention les billes de roulement 9 sont positionnées entre un chemin de roulement interne 10 formé dans l' arbre de sortie 5 et une structure de roulement externe constitué de l'assemblage de deux demi-chemins de roulement 11 et 12 réalisés par conformage de tôle d'acier et comportant chacun une portion centrale profilée formant piste de roulement torique pour les billes 9 et une portion de collerette externe radiale droite 13 et 14, respectivement, accolées l'une à l'autre par leurs faces adjacentes dans un plan médian de la piste de roulement, lors du montage du chemin de roulement externe, comme on le verra ci-après. Dans l'exemple considéré, les portions de collerettes 13 et 14 sont prolongées extérieurement par des portions de viroles cylindriques coaxiales 15 et 16 s'étendant dans des directions opposées de part et d'autre du plan médian de jonction des portions de collerettes 13 et 14, ces portions de viroles extérieures 15 et 16 étant montées dans une extrémité de diamètre élargi 17 de l'alésage 6 se raccordant à ce dernier par un épaulement radial 18.

La structure de chemin de roulement externe est verrouillée en position dans la portion de diamètre élargi 17, avec l'extrémité axiale de la portion de virole 15 en appui contre l'épaulement 18, par une partie de corps 19 rapportée sur le boîtier 7 et fixée à celui-ci par des boulons 20. Conformément à l'invention, un premier (13) des demi-chemins de roulement externes comporte une partie de prolongement 21 opposée à la portion de collerette 13 et portant une structure de joint à lèvre 22, incluant typiquement un ressort jarretière, pour coopérer en contact étanche tournant avec l'arbre de sortie 5, la structure de joint à lèvre 22 comportant une portion périphérique 23 au niveau de l'angle entre la portion de virole extérieure 15 et la portion de collerette 13, coopérant en contact d'engagement axial avec l'épaulement 18 en formant ainsi un joint statique entre la structure de chemin externe et le boîtier 7. La structure de joint à lèvre 22, typiquement en matériau élastomère, est avantageusement surmoulée sur le demi-chemin de roulement 11.

On se réferera maintenant au mode de réalisation de l'ensemble de support en rotation et d'étanchéité de l'arbre de sortie 5 dans la variante de la figure 2. Dans cette variante, le corps 19 est ici formé d'une seule pièce de fonderie avec le boîtier 7, l'arbre de sortie 5 s'étendant en saillie, hors du boîtier 7, au travers d'un alésage 24 du corps 19. Cet alésage 24 débouche dans la cavité interne du boîtier 7, définie par l'alésage 6, par une extrémité de diamètre élargi 17′ se raccordant à l'alésage 24 en formant un épaulement radial 18′. La structure de chemin de roulement externe des billes 9 est, de façon similaire, constituée de l'assemblage de deux demi-chemins de roulement 11 et 12 dont les portions de collerettes externes 13 et 14 sont ici montées accolées dans la partie de diamètre élargi 17′ et verrouillées en position dans celle-ci, avec la partie de collerette 14 en butée contre l'épaulement 18′, par des zones repoussées radialement vers l'intérieur 25 du bord de la partie de diamètre élargi 17′ débouchant dans la cavité du boîtier 7. Le joint statique est ici constitué d'un joint torique 26 disposé dans une gouttière périphérique entre les deux portions de collerettes 13 et 14 et coopérant avec la paroi cylindrique interne de la partie de diamètre élargi 17′. Dans ce mode de réalisation, le joint à lèvre 22 est surmoulé sur la partie de prolongement 21 du demi-chemin de roulement 11 jusqu'au niveau de la portion de collerette externe 13.

On se référera maintenant à l'ensemble de support en rotation et d'étanchéité de l'arbre d'entrée 2 dans l'ouverture 8 du boîtier 7 de la figure 1. La structure de chemin de roulement externe présente une configuration générale similaire à celle qui vient d'être décrit en relation avec l'ensemble de support en rotation et d'étanchéité de l'arbre de sortie 5 de la figure 2, les portions de collerettes externes 13 et 14 étant montées accolées dans une extrémité de diamètre élargi 27 de l'ouverture 8 débouchant dans la cavité interne du boîtier 7 et verrouillées en position contre l'épaulement 18″ par des zones repoussées radialement 25′, comme précédemment. Dans ce mode de réalisation, la partie de prolongement 21 opposée à la portion de collerette 13 s'étend axialement au voisinage de la paroi interne de l'alésage 8 et se termine par une partie rabattue radialement vers l'intérieur 28 positionnant et armant la structure de joint à lèvre 22, laquelle comporte une portion, également surmoulée sur la partie de prolongement 21, s'étendant à recouvrement sur celle-ci pour constituer une partie périphérique formant joint statique 23′ coopérant en engagement radial avec la paroi interne de l'alésage 8. On notera, dans ce mode de réalisation, que les billes 9 sont positionnées et maintenues dans le roulement par une cage à billes 29.

On se réferera enfin à la variante de réalisation de l'ensemble de support en rotation et d'étanchéité de l'arbre d'entrée 2 dans le boîtier 7 dans la variante de la figure 2. Dans ce mode de réalisation, la portion de collerette 13 est prolongée à recouvrement externe autour de la périphérie de la portion de collerette 14 et est elle même montée dans une gouttière 30 formée à l'extrémité d'une pièce support 31, avantageusement en tôle, comportant une portion de virole périphérique coaxiale 32 montée dans une partie d'extrémité de diamètre élargi 33 de l'alésage 6 du boîtier 7 se raccordant à ce dernier par un épaulement 34. La partie de virole externe 32 est verrouillée en appui contre l'épaulement 34 par des portions refoulées 25″ comme dans les deux modes de réalisation précédents. L'étanchéité statique est ici assurée par un joint torique 35 disposé dans une gorge annulaire débouchant dans la portion d'extrémité élargie 33 et coopérant avec la portion de virole 32 du support 31. Dans ce mode de réalisation, le joint à lèvre 22 se limite à une zone active surmoulée sur l'extrémité de la portion d'extrémité rabattue vers l'intérieur 28 de la partie de prolongement 21 du demi-chemin de roulement externe 11.

Selon les besoins, les portions de collerettes externes 13,14 des demi-chemins de roulement externes peuvent être pré- assemblées en position accolées avant montage dans le second élément, par exemple par soudure électrique ou collage, ou lors du surmoulage du joint à lèvre par des portions de matériau élastomère injectées dans des lumières en vis à vis dans ces portions de collerettes.

**Revendications**

1. Ensemble de support en rotation et d'étanchéité d'un premier élément (2 ; 5) tournant dans un second élément (7) comprenant une structure de chemin de roulement externe (11, 12) portant un joint à lèvre (22) et incluant deux demi-chemins de roulement (11, 12) en tôle comportant deux portions de collerettes externes radiales (13, 14) accolées l'une à l'autre servant au montage de la structure du chemin de roulement externe, un chemin de roulement interne (10) étant formé sur le premier élément (2 ; 5), caractérisé en ce que la structure de chemin de roulement externe est montée dans une ouverture du second élément traversée par le premier élément, un premier (11) des deux demi-chemins de roulement comportant une partie de prolongement (21) opposée à la portion de collerette (13) et portant le joint à lèvre (22) coopérant avec le premier élément tournant (2, 5).

2. Ensemble selon la revendication 1, caractérisé en ce que la structure de chemin de roulement externe (11, 12) porte un joint statique (23 ; 23' ; 26) coopérant en contact d'engagement avec une paroi (18 ; 17' ; 8) de l'ouverture.

3. Ensemble selon l'une des revendications 1 et 2, caractérisé en ce que le joint à lèvre (22) est surmoulé sur au moins la partie de prolongement (21) du premier demi chemin de roulement externe (11).

4. Ensemble selon la revendication 2, caractérisé en ce que le joint à lèvre (22) comporte une partie périphérique (23, 23') formant le dit joint statique.

5. Ensemble selon l'une des revendications précédentes, caractérisé en ce que les portions de collerettes externes (13, 14) sont reçues dans un logement étagé (17 ; 17' ; 27) de l'ouverture (6 ; 24 ; 8) et bloquées dans ce logement par un moyen de verrouillage (19 ; 25 ; 25' ; 25").

6. Ensemble selon la revendication 5, caractérisé en ce que le moyen de verrouillage est constitué par au moins une zone repoussée (25,25',25") du logement étagé.

7. Ensemble selon la revendication 5 ou la revendication 6, caractérisé en ce que l'ouverture (6 ; 19 ; 8) est constituée d'un alésage coaxial au premier élément (2 ; 5) formé dans le second élément (7) et comprenant une extrémité de diamètre élargi (17 ; 17' ; 27) se raccordant à l'alésage par un épaulement radial (18; 18' ; 18") délimitant ledit logement étagé.

8. Ensemble selon la revendication 4 et la revendication 7, caractérisé en ce que la partie de prolongement (21) comprend une portion s'étendant axialement (21), la partie périphérique (23') formant joint statique du joint à lèvre (22) étant disposé entre cette dernière et la paroi de l'alésage (8).

9. Ensemble selon la revendication 7, caractérisé en ce que les portions de collerettes (13,14) sont prolongées extérieurement par des portions de viroles coaxiales (15 ; 16) reçues dans le logement étagé (17).

10. Ensemble selon la revendication 4 et la revendication 9, caractérisé en ce que la partie périphérique formant joint statique (23) du joint à lèvre (22) est disposé au voisinage de la portion de virole axiale (15) du premier demi-chemin de roulement (11) et coopère en engagement axial avec l'épaulement (18) du logement étagé (17).

**Claims**

1. Assembly for supporting in terms of rotation and for sealing a first element (2; 5) rotating in a second element (7), comprising an outer raceway structure (11, 12) carrying a lip seal (22), and including two sheet-metal half-raceways (11, 12) having two coupled radial outer collar portions (13, 14) serving for mounting the outer raceway structure, an inner raceway (10) being formed on the first element (2; 5), characterised in that the outer raceway structure is mounted in an orifice in the second element, traversed by the first element, a first (11) of the two half-raceways having an extension part (21) opposite the collar portion (13) and carrying the lip seal (22) interacting with the first rotary element (2, 5).

2. Assembly according to Claim 1, characterised in that the outer raceway structure (11, 12) carries a static seal (23; 23'; 26) interacting in engagement contact with a wall (18; 17'; 8) of the orifice.

3. Assembly according to either of Claims 1 and 2, characterised in that the lip seal (22) is injection-moulded on to at least the extension part (21) of the first outer half-raceway (11).

4. Assembly according to Claim 2, characterised in that the lip seal (22) has a peripheral part (23, 23') forming the said static seal.

5. Assembly according to any of the preceding claims, characterised in that the outer collar portions (13, 14) are received in a stepped receptacle (17; 17'; 27) of the orifice (6; 24; 8) and are blocked in this receptacle by a locking means (19; 25; 25'; 25").

6. Assembly according to Claim 5, characterised in that the locking means is formed by at least one pushed-back zone (25, 25', 25") of the stepped receptacle.

7. Assembly according to Claim 5 or Claim 6, characterised in that the orifice (6; 19; 8) consists of a bore coaxial relative to the first element (2; 5), formed in the second element (7) and having an end of widened diameter (17; 17'; 27) connected to the bore via a radial shoulder (18; 18'; 18") delimiting the said stepped receptacle.

8. Assembly according to Claim 4 and Claim 7, characterised in that the extension part (21) comprises an axially extending portion (21), and the peripheral part (23'), forming a static seal, of the lip seal (22) is arranged between the latter and the wall of the bore (8).

9. Assembly according to Claim 7, characterised in that the collar portions (13, 14) are extended on the outside by coaxial ring portions (15; 16) received in the stepped receptacle (17).

10. Assembly according to Claim 4 and Claim 9, characterised in that the peripheral part (23), forming a static seal, of the lip seal (22) is arranged in the vicinity of the axial ring portion (15) of the first half-raceway (11) and interacts in axial engagement with the shoulder (18) of the stepped receptacle (17).

**Patentansprüche**

1. Einheit zur drehbaren Lagerung und Abdichtung eines in einem zweiten Element (7) sich drehenden ersten Elementes (2; 5), mit einer äußeren Kugellagerring-Anordnung (11, 12), die eine Lippendichtung (22) trägt und zwei Halb-Kugellagerringe (11, 12) aus Blech enthält, die zwei aneinandergefügte Teile von radialen Außenflanschen (13, 14) aufweisen, die der Montage der Anordnung des äußeren Kugellagerrings dienen, wobei am ersten Element (2; 5) ein innerer Kugellagerring (10) ausgebildet ist, dadurch gekennzeichnet, daß die äußere Kugellagerring-Anordnung in einer Öffnung des vom ersten Element durchsetzten zweiten Elementes angeordnet ist, wobei ein erster (11) der zwei Halb-Kugellagerringe gegenüber dem Flanschbereich (13) einen Verlängerungsteil (21) aufweist und die Lippendichtung (22), die mit dem ersten drehbaren Element (2, 5) zusammenwirkt, trägt.

2. Einheit gemäß Anspruch 1, dadurch gekennzeichnet, daß die äußere Kugellagerring-Anordnung (11, 12) eine statische Dichtung (23; 23'; 26) trägt, die in kraftschlüssigem Kontakt mit einer Wand (18; 17'; 8) der Öffnung zusammenwirkt.

3. Einheit gemäß einem der Ansprüche 1 und 2, dadurch gekennzeichnet, daß die Lippendichtung (22) wenigstens über dem Verlängerungsteil (21) des ersten äußeren Halb- Kugellagerrings (11) geformt ist.

4. Einheit gemäß Anspruch 2, dadurch gekennzeichnet, daß die Lippendichtung (22) einen Umfangsteil (23, 23') aufweist, der die statische Dichtung bildet.

5. Einheit gemäß einem der vorangehenden Ansprüche, dadurch gekennzeichnet, daß die äußeren Flanschbereiche (13, 14) in einem gestuften Aufnahmesitz (17; 17'; 27) der Öffnung (6; 24; 8) aufgenommen und in diesem Aufnahmesitz von einem Verriegelungsmittel (19; 25; 25'; 25") blockiert werden.

6. Einheit gemäß Anspruch 5, dadurch gekennzeichnet, daß das Verriegelungsmittel von wenigstens einer getriebenen Zone (25, 25', 25") des gestuften Aufnahmesitzes gebildet wird.

7. Einheit gemäß Anspruch 5 oder Anspruch 6, dadurch gekennzeichnet, daß die Öffnung (6; 19; 8) von einer zum ersten Element (2; 5) koaxialen Bohrung gebildet wird, die im zweiten Element (7) ausgebildet ist und ein Ende mit vergrößertem Durchmesser (17; 17'; 27) umfaßt, das mit der Bohrung über einen radialen Ansatz (18; 18'; 18"), der den gestuften Aufnahmesitz begrenzt, verbunden ist.

8. Einheit gemäß Anspruch 4 und Anspruch 7, dadurch gekennzeichnet, daß der Verlängerungsteil (21) einen sich in axialer Richtung erstreckenden Bereich (21) umfaßt, wobei der periphere Teil (23'), der die statische Dichtung der Lippendichtung (22) bildet, zwischen diesem letzteren und der Wand der Bohrung (8) angeordnet ist.

9. Einheit gemäß Anspruch 7, dadurch gekennzeichnet, daß die Flanschbereiche (13, 14) außen durch Abschnitte von koaxialen Ringen (15; 16), die in dem gestuften Aufnahmesitz (17) aufgenommen werden, verlängert sind.

10. Einheit gemäß Anspruch 4 und Anspruch 9, dadurch gekennzeichnet, daß der periphere Teil, der die statische Dichtung (23) der Lippendichtung (22) bildet, in der Umgebung des Bereichs des axialen Rings (15) des ersten Halb- Kugellagerrings (11) angeordnet ist und in axialem Eingriff mit dem Ansatz (18) des gestuften Aufnahmesitzes (17) zusammenwirkt.

FIG_1

FIG.2